# EUROPEAN PATENT APPLICATION

(11) **EP 2 204 721 A2**
(43) Date of publication of application: **07.07.2010**
(21) Application number: 10150050.2
(22) Date of filing: 04.01.2010
(51) Int. Cl.: G06F 3/023, G06F 3/048

(54) **Method and apparatus for navigation between objects in an electronic apparatus**

(30) Priority: 06.01.2009 KR 20090000874
(71) Applicant: Samsung Electronics Co., Ltd., Suwon-si, Gyeonggi-do (KR)
(72) Inventor: Shin, Seung Woo, Gyeonggi-do (KR); Han, Myoung Hwan, Gyeonggi-do (KR)
(74) Representative: Boakes, Jason Carrington

(57) **Abstract**

A method and an apparatus of object navigation using a touch screen divided into an output area and a control area utilizes organic interaction between the output area and the control area. A first area is an output area for displaying an object, and a second area for displaying a Graphic User Interface (GUI) is a control area for controlling navigation of the object. When an event for navigation occurs in one of the first area and the second area, change information according to the navigation is provided in both the first area and the second area, so that a touch screen can be manipulated without any blockage of an image.

## Description

### BACKGROUND OF THE INVENTION

### Field of the Invention

The present invention relates generally to control of an electronic apparatus having a display unit. More particularly, the present invention relates to a method of controlling navigation between_objects through interaction between functionally divided display areas, and an electronic apparatus and a system supporting the method.

### Description of the Related Art

Recent rapid advances in communication technologies has caused a large increase in the functionality of portable terminals, accompanied by the development of diversified User Interfaces (UIs) and diversified functions using the UIs.

Such improvements or developments include the recent appearance of a portable terminal having a touch screen that replaces a typical keypad, or a combination of touch screen and keypad.

The touch screen as described above enables users to control various functions of the portable terminal and permits a more compact design of the device. Portable terminal equipped with a touch screen provides various objects and allows navigation between the objects through different ways of touching the screen, such as "tap," "drag," "flick," and "drag & drop" events, just to name some different ways to manipulate functional capability of the device by different types of touch.

Meanwhile, in controlling the navigation of objects in a conventional portable terminal, a user causes occurrence of an event by direct input of the event through a finger or stylus by himself or herself being pressed against a certain portion of the screen. During the direct event input, the finger or stylus may hide that object, which may disturb the user's intuitive recognition of the change due to the object navigation.

Furthermore, since the portable terminal equipped with the touch screen allows navigation operations only through simple event input, there is a limitation in providing various levels of convenience and promoting users' interest. Also, not only the portable terminals as described above, but also even large-size display devices having a touch-based input unit have the same problems. Moreover, even in the case of inputting through a separate pointing device, a cursor or something indicating a pointing position may hide the object. Thus, there is a need in the art to provide a navigation system that does not obscure portions of the screen.

### SUMMARY OF THE INVENTION

The present invention provides a method for controlling navigation between objects through interaction between functionally divided display areas, and an electronic apparatus and a system for functioning according to the method.

Also, the present invention provides an electronic apparatus having a display area of a display unit divided into an output area and a control area and being operated through organic interaction between the output area and the control area, and a control method thereof.

Also, the present invention provides a method and an apparatus for object navigation that employs a touch screen divided into an output area and a control area, and utilizes organic interaction between the output area and the control area.

Also, the present invention provides a portable terminal that includes a first area displaying objects and a second area displaying GUI objects for controlling the operation of the objects.

Also, the present invention provides a display device that has a display area divided into an output area and a control area. The display area controls object display and object operation through organic interaction between the output area and the control area.

Also, the present invention provides a user interface that employs a touch screen divided into an output area and a control area. In response to the occurrence of an input for object navigation in any of the output area and the control area, the invention provides information about change due to the navigation in both of the output area and the control area.
In accordance with an exemplary aspect of the present invention, an object navigation control system preferably includes: a first area for displaying an object, and a second area for displaying a Graphic User Interface (GUI) for controlling navigation of the object.

When an event for navigation occurs in one of the first area and the second area, it is preferable that change information based on the navigation is provided in both the first area and the second area.

In accordance with another exemplary aspect of the present invention, an electronic apparatus preferably includes: a touch screen including an output area for outputting/displaying an object; a control area for displaying a Graphic User Interface (GUI) for controlling navigation of the object; and a control unit for processing navigation of the object through interaction between the output area and the control area.

According to an exemplary aspect of the present invention, when an event for navigation occurs in one of the output area and the control area, the control unit provides change information according to the navigation in both the output area and the control area.

In accordance with another exemplary aspect of the present invention, a method of controlling object navigation preferably includes: detecting an event in one of an output area and a control area; and in response to the event, controlling navigation of an object provided in the output area and movement of a change item provided on the control area.

The output area comprises an area for displaying an object, and the control area comprises an area for displaying a Graphic User Interface (GUI) for controlling navigation of the displayed object. The control area displays each index symbol corresponding to an object shifted according to the event through the GUI, and displays location change of each index symbol of the GUI through the change item.

When a particular object displayed in the output area is located in the control area for executing the particular object.

In accordance with another exemplary aspect of the present invention, a display device includes: a display unit for displaying an output area and a control area; a user input unit for inputting an event for control of the output area or the control area; and a control unit for displaying an object in the output area in response to the event and displaying a graphic user interface for controlling the object in the control area.

In accordance with another exemplary aspect of the present invention, a method of controlling a display device preferably includes: determining whether or not there is an input of an event for controlling a graphic user interface displayed in a control area; and changing an object displayed in an output area in response to the event.

In accordance with yet another exemplary aspect of the present invention, a method of controlling a display device preferably includes: determining if there is an input of an event for controlling an object displayed in an output area; and changing a graphic user interface displayed in a control area in response to the event.

### BRIEF DESCRIPTION OF THE DRAWINGS

The objects, features and advantages of the present invention will become more apparent from the following detailed description in conjunction with the accompanying drawings, in which:

FIG. 1 illustrates a particular example of one way that a portable terminal having a touch screen is provided according to an exemplary embodiment of the present invention;

FIG. 2 is a flow diagram illustrating a method of object navigation control in a portable terminal according to an exemplary embodiment of the present invention;

FIG. 3 is a view showing exemplary display screens when object navigation is performed in an output area according to an exemplary embodiment of the present invention;

FIG. 4 is a view showing exemplary screens when object navigation is performed in a control area according to an exemplary embodiment of the present invention;

FIG. 5 is a view showing exemplary screens for executing a particular application through interaction between an output area and a control area according to an exemplary embodiment of the present invention;

FIG. 6 is a view illustrating a process of execution of a selected object and object navigation by an object output area according to an exemplary embodiment of the present invention;

FIG. 7 illustrates a process of object navigation by a control area and execution of a selected object according to another exemplary embodiment of the present invention;

FIG. 8 illustrates exemplary screens for controlling object navigation through interaction between an output area and a control area according to another exemplary embodiment of the present invention;

FIG. 9 illustrates exemplary screens for controlling object navigation through interaction between an output area and a control area according to another exemplary embodiment of the present invention; and

FIG. 10 is a block diagram schematically illustrating exemplary structure of a portable terminal according to the present invention.

### DETAILED DESCRIPTION

Hereinafter, exemplary embodiments of the present invention are described in detail with reference to the accompanying drawings. The same reference numbers are used throughout the drawings to refer to the same or like parts. Detailed descriptions of well-known functions and structures incorporated herein may be omitted to avoid obscuring appreciation of the subject matter of the present invention by a person of ordinary skill in the art.

The present invention provides for control of an electronic apparatus through interaction between an output area and a control area divided from a display area of the electronic apparatus. The following description employs a portable terminal as a representative example of the electronic apparatus. However, the method, apparatus, and system of the present invention is not in any way limited to use with a portable terminal, and the present invention is applicable to a variety of electronic apparatuses having any type of input unit and output unit allowing input and output of user gestures, which are explained according to the exemplary embodiments described below. For example, the electronic apparatuses of the present invention may include portable terminals, such as a mobile communication terminal, a PDA (Personal Digital Assistant), a portable game terminal, a digital broadcast player and a smart phone, and display devices, such as a TV (Television), an LFD(Large Format Display), a DS (Digital Signage), and a media pole, just to name a few possibilities. That is, the electronic apparatuses to which the present invention is applicable include all information communication apparatuses, multimedia apparatuses, and application apparatuses thereof. Further, the input unit of the present invention includes a touch pad, a touch screen, a motion sensor, a voice recognition sensor, a remote controller, and a pointing apparatus.

Therefore, although the exemplary embodiments of the present invention described below discuss a method, an apparatus, and a system using a portable terminal as representative examples, the present invention is not limited to the portable terminal and an operation method thereof and is applicable to not only the portable terminal but also all types of electronic apparatuses including a display.

The present invention provides a scheme for object navigation in a touch screen of a portable terminal. In the following exemplary embodiments of the present invention, the objects refer to various types of items displayed according to execution applications. In other words, the objects refer to various types of items provided according to the User Interfaces (UIs) activated in accordance with execution applications. For example, the objects may include items, such as an album, a music file, a photograph file, and a text message. Such an item may be provided as an icon, a text, or an image. The embodiments of the present invention propose a disc user interface for navigation of multimedia items and discusses navigation between multimedia items in the disc user interface as a representative example.

According to an exemplary embodiment of the present invention, a touch screen is divided into an object output area (hereinafter, referred to as "output area") for output of an object and an object control area (hereinafter, referred to as "control area") for control of an object displayed on the output area. Especially, the control area displays a Graphic User Interface (GUI) object for controlling the operation of an object, which may have different shapes according to the execution applications.

According to the exemplary embodiment of the present invention as described above, since it is possible to perform object navigation through interaction between an output area and a control area divided from a touch screen, the invention can intuitively provide information of change due to the navigation and secure user's visual field according to the navigation.

As described above, the exemplary embodiment of the present invention proposes a portable terminal including a first area displaying an object, such as a multimedia item, and a second area displaying a GUI object for controlling operation of the object. Further, the present invention proposes a scheme, by which the first area and the second area are individually controlled, navigation through corresponding objects is performed, and the objects are organically changed in the portable terminal.

Hereinafter, a portable terminal equipped with a touch screen according to an exemplary embodiment of the present invention will be described with reference to the accompanying drawings. However, it should be noted that the portable terminal of the present invention is not limited to the following description and the present invention can be applied to various additional examples based on the examples described herein below.

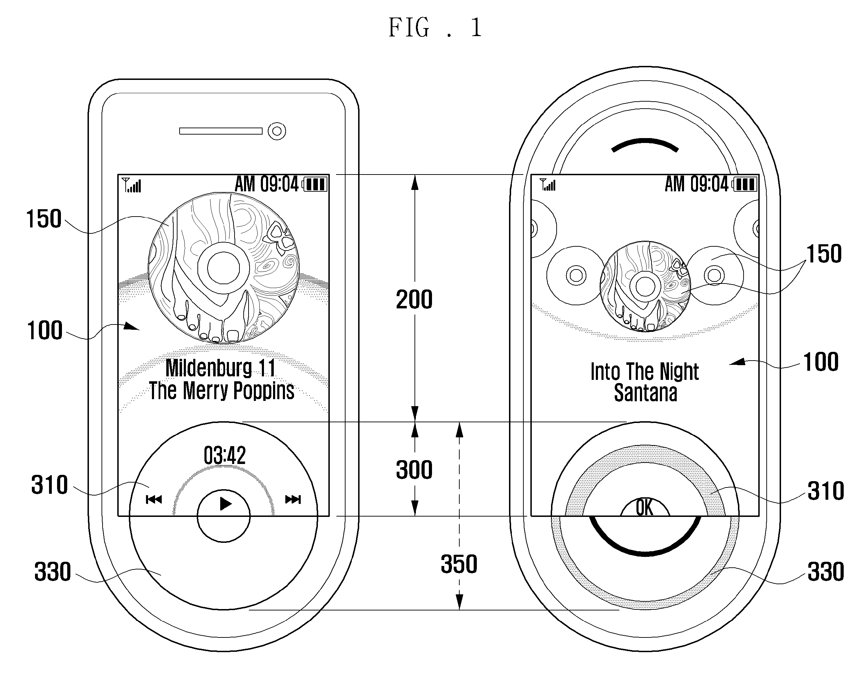

FIG. 1 illustrates an example of a portable terminal having a touch screen according to an exemplary embodiment of the present invention.

Referring now to the example shown in FIG. 1, a portable terminal preferably includes a touch screen 100 divided into an output area 200 for displaying an object 150 and an object control area 300 for controlling the object 150 displayed on the output area 200. The control area 300 provides a GUI object for controlling the operation of the object 150. The GUI object in the control area 300 will be described in more detail with reference to the accompanying drawings. Here, the object 150 shown in the output area of the touch screen 100 in FIG. 1 is an example of an object corresponding to a multimedia item.

Furthermore, in the exemplary portable terminal according to the present invention, the control area 300 may extend to the part designated by reference numeral 350. The part designated by reference numeral 350 includes a touch pad part. That is, according to the present invention, the touch screen 100 can be divided into the output area 200 and the control area 300, and the control area 300 may be extendible through an organic combination between the touch screen 100 and a touch pad adjacent to the touch screen 100.

The extended control area 350, which extends from control area 300, includes a GUI area 310 and the PUI area 330. The GUI area 310 corresponds to the control area 300, which is an area symmetric to the PUI area 330 within the touch screen 100, and the PUI area 330 corresponds to the touch-pad. The GUI area 310 of the touch screen 100 and the PUI area 330 of the touch pad are disposed adjacent to each other and are organically connected to each other. In the example shown in FIG. 1, the touch pad is disposed under and adjacent to the lower end of the touch screen 100.

Meanwhile, according to this exemplary embodiment of the present invention, the division between the output area 200 and the control area 300 is provided for descriptive purposes, and the output area 200 not only displays objects 150 of various shapes but also allows user's event input. Further, although the control area 300 is described as an area for input of an event for control of the object 150, and a person of ordinary skill in the art should understand and appreciate that the control area 300 can display GUI objects of various shapes.

That is, the output area 200 corresponds to an area for output of the object 150, and a user can intuitively control movement of the object 150 through an input event in the output area 200. Further, in order to prevent a corresponding object 150 from being hidden by the input of the event, the user can control movement of the object 150 by using the control area 300. At this time, the navigation of the object 150 displayed in the output area 200 may be controlled in accordance with the input event using the control area 300.

The control area 300 also corresponds to an area expressed through a GUI object for controlling the object 150 existing in the output area 200. When a user utilizes direct controls the object 150 of the output area 200, the GUI object of the control area 300 changes according to the direct control. The output area 200 and the control area 300 operate through interaction between them. That is to say, when an input occurs within one of the output area 200 and the control area 300, an output also occurs in the other area.

The GUI object displayed in the control area 300 is provided as a virtual item adaptively changing according to the execution application. That is, the GUI object is not fixed as a specific type. By generating an input event in the GUI object, a user can control navigation of the object 150 in the output area 200. Examples of the GUI object and object navigation using the same will be described with reference to the drawings described below.

Meanwhile, the touch pad preferably corresponds to a physical medium processing a user's input through interaction between a user and a portable terminal. Especially, the touch pad includes a control area for controlling the operation of the object.

The portable terminal of the present invention is not limited to the shape described above with reference to FIG. 1 and includes all types of portable terminals having a touch screen 100 divided into an output area 200 and a control area 300. Nor are any ratios of the size of output area to the control area expressed or implied by the examples provided herein, Furthermore, the person of ordinary skill in the art understands and appreciates that the portable terminal according to the present invention is not limited to any particular types of portable terminals, each of which has a touch screen 100 divided into an output area 200 and a control area 300 and has an extended control area 350 formed through an organic connection between the GUI area of the touch screen 100 and the PUI area of the touch pad.

As described above with reference to FIG. 1, the present invention proposes a portable terminal having a touch screen including a first area displaying the object 150 and a second area displaying a GUI object for control of the object, and a method for controlling navigation of an object in the portable terminal.

In the exemplary embodiment of the present invention, the object provided to the first area is moved in the direction in which the user input event occurring in the first area progresses, and change information regarding the object is provided through a GUI object of the second area. Furthermore, the object of the first area is moved according to the degree of the progress of the user input event occurring in the GUI object of the second area. For example, with regard to gestures, when a "flick" event occurs in the first area, the display of the object is moved in the direction of the progress of the flick event, simultaneously while additional virtual items are provided as GUI objects of the second area.

Hereinafter, a method for controlling navigation of an object in a portable terminal including an output area and a control area as described above will be described. It should be noted that the present invention is not limited to the exemplary embodiments described below and is applicable to various other applications based on at least the following exemplary embodiments.

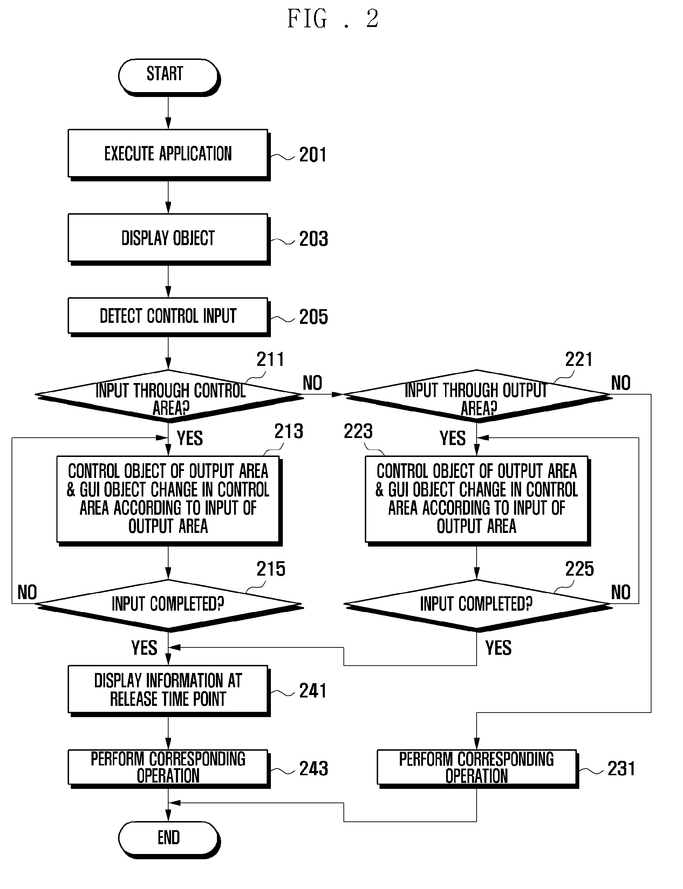

FIG. 2 is a flow diagram illustrating a method of object navigation control in a portable terminal according to an exemplary embodiment of the present invention.

Referring now to FIGs. 1 and 2, the portable terminal first executes an application according to a user request (step 201) and displays screen data according to the application (step 203). Here, the screen data includes an object of a particular item provided according to the executed application. For example, the screen data may include, for example, the object 150 of the multimedia item as shown in FIG. 1.

Next, (step 205) the portable terminal can detect a control input of the user. The control input may occur in either a touch screen or a touch pad of the portable terminal. In the exemplary operation in the flowchart of FIG. 2, the control input occurs in the touch screen and the portable terminal detects the control input. The control input corresponds to an input event by the user. The input event may be various types of touch inputs, including a "tap" event, a "sweep" event, a "flick" event, and a "drag-and-drop" event.

Still referring to FIG. 2, when the portable terminal detects the control input of the user through the touch screen, the portable terminal determines whether the control input is an input occurring in the control area 300 (step 211) or an input occurring in the output area 200 (step 221).

As a result, when there is a determination that the control input is an input occurring in the control area 300 (step 211), the portable terminal controls object navigation in the output area based on the input event occurring in the control area and controls change items of the GUI object of the control area (step 213). Here, the input event in step 213 may be recognition of a sweep event or a tap event, and the navigation and the change items are controlled based on the direction of progress of the sweep event. Thereafter, the portable terminal checks as to whether the input event has been completed (step 215), and continues to perform corresponding operations up to step 213 until the input event is completed.

When the input of the input event has completed (step 215), that is, when the input event is released, the portable terminal displays information of the release time point (step 241). That is, the portable terminal displays the object navigated to in the output area according to the input event and change items changed in the GUI object of the control area. Thereafter, the portable terminal performs a corresponding operation (step 243). For example, the portable terminal may either continue to perform object navigation by the input event as described above or perform operations such as execution or reproduction of a currently provided object.

However, when there is a determination that the control input is an input occurring in the output area 200 (step 221), the portable terminal controls object navigation in the output area based on the input event occurring in the output area and controls change items of the GUI object of the control area (step 223). Here, the input event in step 223 may be a sweep event or a flick event, and the navigation and the change items are controlled based on the input direction of the sweep event or the flick event. Thereafter, the portable terminal checks if the input event has been completed (step 225), and can continue to perform corresponding operations up to step 223 until the input event is completed. Thereafter, the portable terminal can perform operations corresponding to the above description in relation to steps 241 to 243.

When it is determined that the control input is neither an input in the control area nor an input in the output area (steps 211 and 221), the portable terminal performs corresponding operations according to the input event of the user occurring on the touch screen 100 (step 231). For example, when a tap event in relation to a particular object occurs, according to the present invention, it is possible to perform an application linked to a corresponding object, enter a sub-menu, or reproduce the object in response to an input event ordering the reproduction of the object.

The above description discusses exemplary operation of a method of controlling object navigation through interaction between an output area and a control area in a portable terminal according to an exemplary embodiment of the present invention. Hereinafter, examples of the operation described above with reference to FIGs. 1 and 2 will be discussed in more detail based on the exemplary views of screens. It should be noted that the presently claimed invention is not limited to the exemplary views of screens and is applicable to variations embodiments based on the exemplary embodiments described herein below.

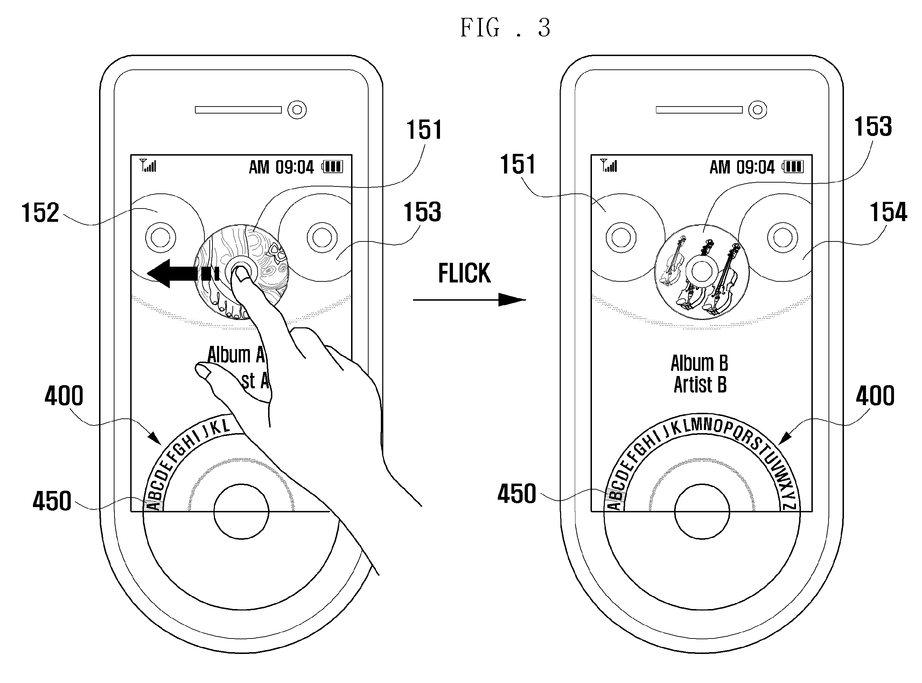

FIG. 3 is a view showing exemplary screens when object navigation is performed in an output area according to an exemplary embodiment of the present invention.

The screens shown in FIG. 3 correspond to exemplary screens in which object navigation is performed in the output area 200 of the touch screen 100 of the present invention and the change information of the control area 300 in relation to the output area 200 is displayed.

FIG. 3 is based on an assumption that the input event is a flick event and the provided object comprises a multimedia item. The multimedia item may be displayed as an item shaped like a typical Compact Disc (CD) as shown in FIG. 3, which may have, for example, a shape/display of an album of a particular artist.

Still referring to FIG. 3, first, the user may generate an input event (i.e. flick event) on an object 151, which is currently activated and can be controlled by the user, from among the objects provided on the object output area 200. In FIG. 3, the object 151 is album A of artist A.

Next, the object 151 is moved in the user's flick event progress direction (for example, left direction), is moved into the area in which the object designated by reference numeral 152 has been located, and is then deactivated. Also, the object designated by reference numeral 153 is moved to the area in which the object 151 has been located, and is then activated. At this time, a new object 154 in a deactivated state may be provided to the area in which the object 153 has been located. The object 153 navigated and activated according to the flick event may be, for example, album B of artist B.

As described above, the user can directly control navigation of a desired object 151 on the object output area 200. Here, when the object output area 200 is directly controlled, the control area 300 is operated in cooperation with the output area 200.

In other words, when navigation or change between objects is performed according to the flick event in the object output area 200, the portable terminal provides change information due to the navigation by updating a change item 450 provided on a GUI object 400 of the control area 300. The GUI object 400 corresponds to a virtual item and may take on different shapes according to execution applications. In FIG. 3, the GUI objects 400 are provided through the alphabet, and change information according to the navigation is provided on the alphabet.

In FIG. 3, the GUI object 400 either displays each index symbol corresponding to a multimedia item object or displays location change between index symbols through the change item 450. In FIG. 3, the index symbol may correspond to the first letter of each multimedia item object, so that the index is alphabetized according to the first letter of each object.

For example, on the assumption that the filename of album A is "AAA" and the filename of album B is "BBB," when album A is located in the activation area, the change item 450 is located on letter "A" from among the GUI objects 400 of the control area 300. Additionally, when album B is located in the activation area, the change item 450 is located on letter "B" from among the GUI objects 400 of the control area 300.

The change information may be provided by the change item 450 set as described above. The change item 450 may be a marking item indicating the location of an object activated in the output area 200 as shown in FIG. 3. The change item 450 is an item for indicating the location of an activated object and can be provided by using a special type of item as shown in FIG. 3, a color item, a block effect item, an intaglio item, etc.

As described above with reference to FIG. 3, according to the flick event input in the output area 200, the object of the output area 200 is navigated from the object of album A to the object of album B, and the change item 450 provided on the GUI object 400 of the control area 300 is moved from the location of letter A to the location of letter B.

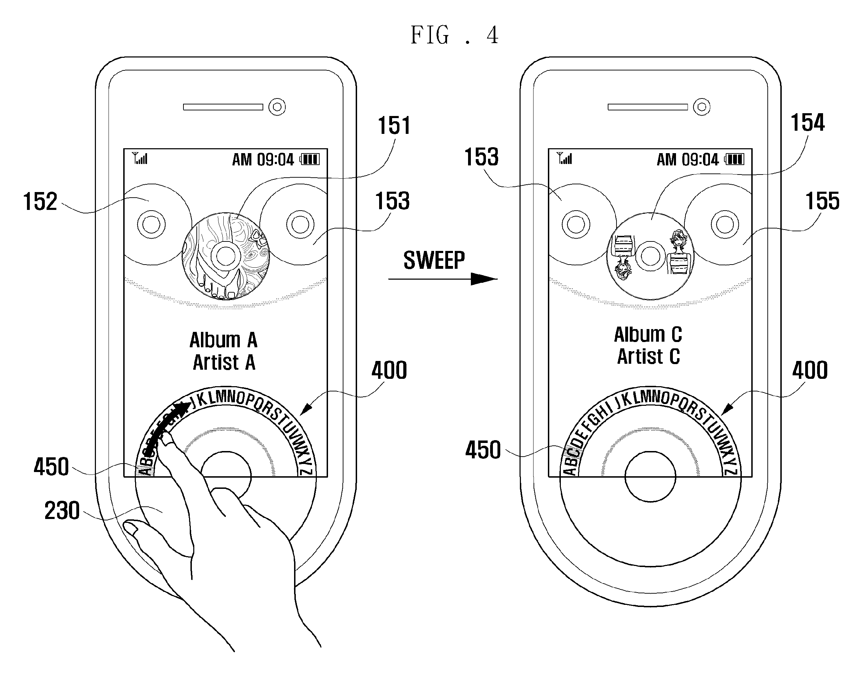

FIG. 4 is a view showing exemplary screens when object navigation is performed in a control area according to an exemplary embodiment of the present invention.

The screens shown in FIG. 4 correspond to screens in which navigation of an object in the object output area 200 is performed by the control area 300 in the touch screen 100 of the present invention and change information of the control area 300 is displayed.

FIG. 4 shows an example based on an assumption that the input event comprises a sweep event and the provided object is a multimedia item. Here, although FIG. 4 shows sequential navigation control by a sweep event, the control can also be made, for example, by a tap event, too. For example, through occurrence of a tap event on a particular letter of the GUI object 400 of the control area 300, the present invention permits intuitive movement to and display of an object having a first letter equal to the particular letter.

First, the user can perform a sweep event occur on the GUI object 400 provided in the control area 300. The GUI object 400 may include virtual items corresponding to an alphabet as described above with reference to FIG. 3.

Next, the portable terminal processes navigation of the object displayed on the output area 200 according to the degree of progress of the sweep event performed by the user. As an example, a case in which a change item 450 is provided on letter A of the GUI object 400 of the control area 300 corresponding to the object 151 will now be described below.

With reference to FIG. 4, first, if a user starts a sweep event at letter A on the GUI object 400 and terminates the sweep event at letter C, object shift or navigation is sequentially performed from an object corresponding to letter A through an object corresponding to letter B to an object corresponding to letter C. Also, the object corresponding to letter C at the time point at which the sweep event is completed is provided to the activated area.

That is, if the user starts the sweep event at letter A on the GUI object 400 and terminates the sweep event at letter C, the object 153 and the object 154 are sequentially provided to the centered position (in this case) of the object 151 currently activated according to the sweep event. Further, a new object 155 in a deactivated state may be provided to the area in which the object 154 of album C was previously located. Therefore, the object 154 navigated and finally activated through the sweep event may be, for example, album C of artist C.

As described above, a shift between objects of the output area 200 can be performed according to the sweep event of the control area 300. Further, change information due to the navigation is provided through the change item 450 and the GUI object 400 of the control area 300. The GUI object 400 corresponds to a virtual item and can be provided with different shapes according to the execution applications. In FIG. 4, the GUI objects 400 are provided through an alphabetically divided list, and change information according to the navigation is provided on the alphabet.

The change information may be provided by the change item 450 set as described above. The change item 450 may comprise a marking item indicating the location of an object activated in the output area 200, can be provided by using a special type of item as shown in FIG. 3, a color item, a block effect item, an intaglio item, etc.

As described above with reference to FIG. 4, according to the sweep event input in the control area 300, the object of the output area 200 is navigated from the object of album A to the object of album C, and the change item 450 provided on the GUI object 400 is moved from the location of letter A to the location of letter C.

According to the present invention as described above, navigation of an object in the control area 300 can be performed through the control of the control area 300. Therefore, it is possible, through the control area 300, to search through the objects aligned in a particular order (for example, alphabetical order) within a corresponding category. For example, it is possible to rapidly search through album titles aligned in an alphabetical order.

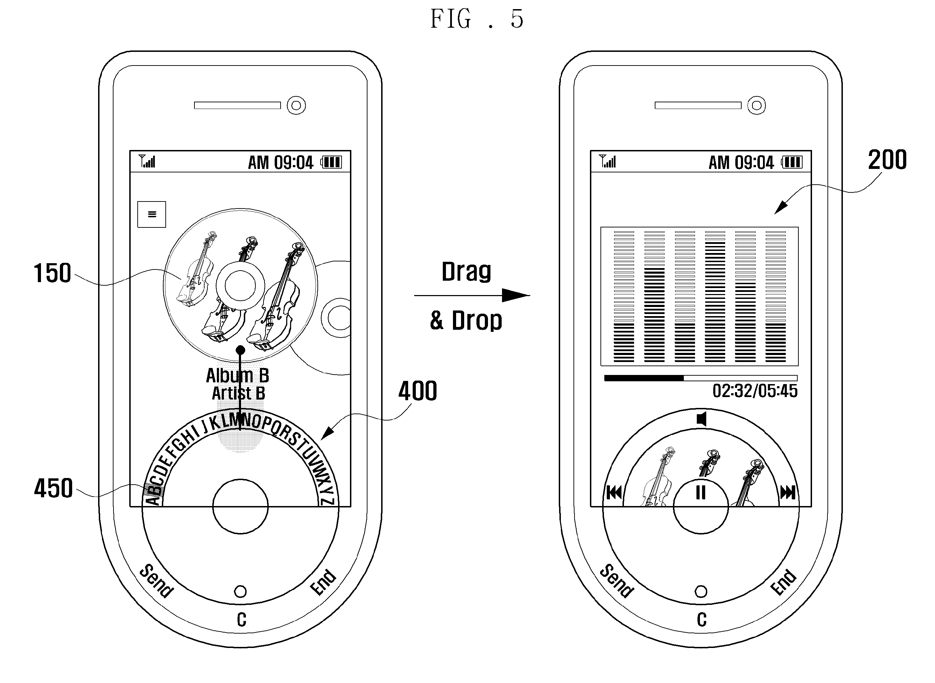

FIG. 5 is a view showing exemplary screens for executing a particular application through interaction between an output area and a control area according to an exemplary embodiment of the present invention.

Referring now to FIG. 5, the user can perform an operation, such as execution or reproduction of the object 150, by an input event moving a particular object 150 activated according to the navigation in the object output area 200 to the control area 300. FIG. 5 is based on an assumption that the input event is a drag-and-drop event.

As shown in FIG. 5, the object 150 moves from the object output area 200 to the control area 300 through the drag-and-drop event. Then, upon recognizing the drag and drop of the object 150 from the object output area 200 to the control area 300, the portable terminal can execute an application corresponding to the object the object 150.

In the example shown in FIG. 5, when the portable terminal has recognized that the object 150 has been dragged and dropped to the control area 300, the portable terminal executes an application of a music reproduction function for reproduction of the object 150, and reproduces music in relation to the object 150 by the application. For example, the portable terminal reproduces music files recorded in album B of artist B.

At this time, the GUI object 400 provided on the control area 300 is provided after being changed into a new virtual item corresponding to the execution application. That is, as shown in FIG. 5, a GUI object 400 preferably includes virtual items (|◄, ∥, ►, ►| ) in relation to reproduction of the music files is provided. Further, the object provided in the object output area 200 is provided after being changed into a new object corresponding to the execution application. That is, as shown in FIG. 5, screen data including objects, such as a graphic equalizer in relation to reproduction of the music file, a progress bar, a title of the music file, and words of the song, is displayed.

At this time, as shown in FIG. 5, when the object 150 selected by the user is moved from the output area 200 to the control area 300, the portable terminal may provide the user with a feedback, such as a sound and visual effect, in order to enhance the reality.

As shown in FIGs. 1 to 5, a portable terminal according to the present invention provides a Disc User Interface (DUI), so that it is possible to easily and rapidly perform object navigation and execute a selected object through interaction between the output area 200 and the control area 300 in the disc user interface.

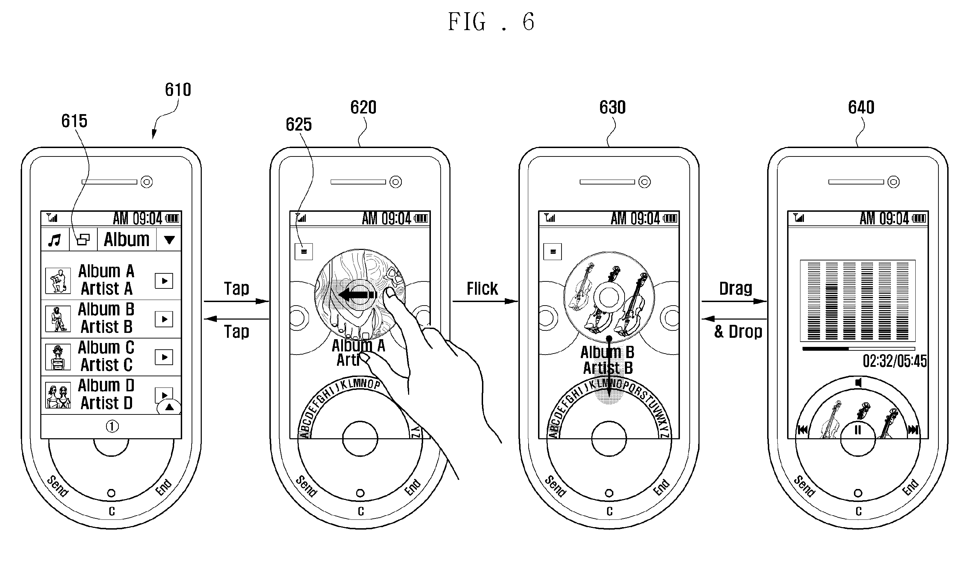

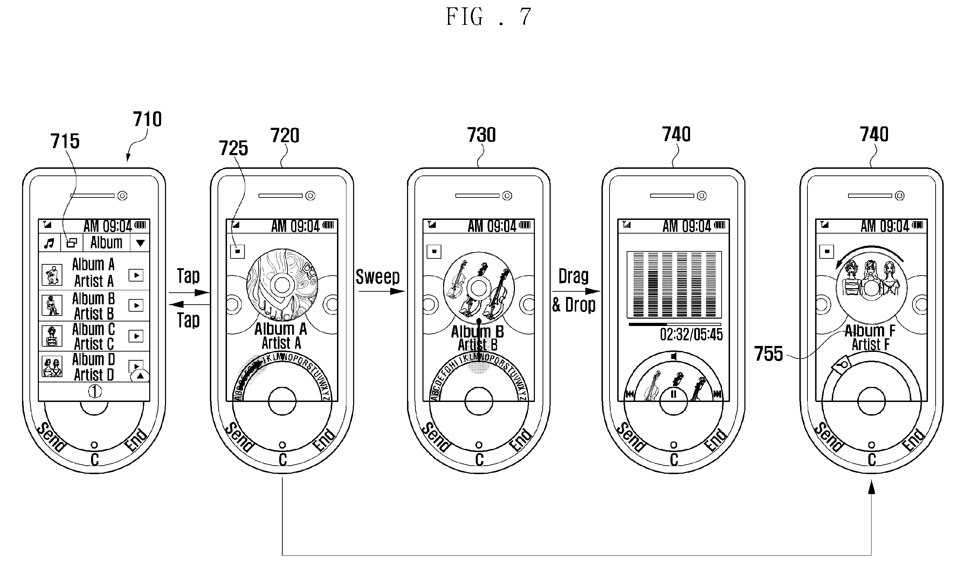

Hereinafter, the operation as discussed above with reference to FIGs. 1 to 5 will be described in an intuitive view with reference to FIGs. 6 and 7.

FIG. 6 is a view illustrating a process of execution of a selected object and object navigation by an object output area according to an exemplary embodiment of the present invention.

Referring now to FIG. 6, reference numeral 610 indicates a screen in a list view mode of the present invention. For example, the screen designated by reference numeral 610 corresponds to an exemplary screen providing a list of album contents stored in the portable terminal. Next, when a tap event performed by a user for shifting from the list view mode to an image view mode occurs, the portable terminal provides the album contents after changing the mode from the list view mode to the image view mode, as shown in the screen designated by reference numeral 620. The image view mode corresponds to a disc user interface proposed by the present invention as described above. The tap event can be input through a tap point allocated for shifting between the list view mode and the image view mode, as designated by reference numeral 615.

Further, when a user's tap event for the mode shift from the image view mode as shown in the screen 620 to the list view mode occurs, the portable terminal may provide the screen after changing the mode thereof to the list view mode as shown in the screen 610. The tap event can be input through a tap point allocated for shifting between the list view mode and the image view mode, as designated by reference numeral 625.

Next, in the image view mode as shown in the screen 620, the user can input an input event through the object activated in the current output area 200 for navigation of the album contents. It is assumed that the input event is a flick event input to the object output area 200.

Therefore, the portable terminal controls the object navigation based on the direction of progress of the flick event. For example, if the flick event progresses leftward in the object of album A displayed on the screen 620, the portable terminal moves the object of album A leftward and then activates and provides the object of album B at the activation position as shown in the screen 630. At this time, during the shift from the object of album A to the object of album B, the portable terminal can provide an intuitive screen that looks like an actual disc change from album A to album B, as shown.

Moreover, the portable terminal displays the change item 450 on the location of a letter corresponding to the object of album B, which is an object currently located in the activation area as a result of the object shift. That is, in response to the object shift by the flick event of the user, the portable terminal adaptively changes and provides the change item 450 displayed on the letter B provided as the GUI object 400 of the control area 300.

Next, when a particular object is located and activated in the activation location as shown in the screen 620 or 630, the user can make a command, such as execution or reproduction of the particular object.

For example, as shown in the screen designated by reference numeral 630, the user can move the currently activated album B object from the output area 200 to the control area 300 through an input event. Here, it is assumed that the input event is, for example, a drag-and-drop event.

Therefore, in response to the drag-and-drop event by the user, the portable terminal drags and then drops the album B object from the output area 200 to the control area 300. Then, upon recognizing the drop of the album B object in the control area 300, the portable terminal executes the album B object as shown in the screen designated by reference numeral 640. The above exemplary description with reference to FIG. 6 corresponds to a case in which the portable terminal executes an application in relation to reproduction of album contents and performs reproduction of music files included in the album B object by the application.

FIG. 7 illustrates a process of object navigation by a control area and execution of a selected object according to another exemplary embodiment of the present invention.

Referring now to FIG. 7, reference numeral 710 indicates a screen in a list view mode of the present invention. For example, the screen designated by reference numeral 710 corresponds to an exemplary screen providing a list of album contents stored in the portable terminal. Next, when a tap event is performed by a user for shifting from the list view mode to an image view mode occurs, the portable terminal provides the album contents after changing the mode from the list view mode to the image view mode, as shown in the screen designated by reference numeral 720. The image view mode corresponds to a disc user interface proposed by the present invention as described above. The tap event can be input through a tap point allocated for shifting between the list view mode and the image view mode, as designated by reference numeral 715.

Furthermore, when a user's tap event for the mode shift from the image view mode as shown in the screen 720 to the list view mode occurs, the portable terminal may provide the screen after changing the mode thereof to the list view mode as shown in the screen 710. The tap event can be input through a tap point allocated for shifting between the list view mode and the image view mode, as designated by reference numeral 725.

Next, in the image view mode as shown in the screen 720, the user can input an input event in the control area 300 for navigation of the album contents. Here, the input event may comprise, for example, a tap event or sweep event input to the object output area 200. FIG. 7 is based on an assumption that the input event comprises a sweep event.

Therefore, according to the present invention, the portable terminal controls the object navigation based on the degree of progress of the sweep event. For example, as shown in the screen designated by reference numeral 720, the user can start the sweep event at the start tap point of the control area 300, that is, at the location of letter A on the GUI object 400. The start of the sweep event may correspond to the step of touching by the user. Thereafter, the user can proceed the sweep event from the location of letter A toward letter Z. The progress of the sweep event may correspond to the step of movement after the touch by the user. Then, according to the progress of the sweep event, the portable terminal sequentially changes and displays objects on the activation area of the output area 200 as shown in the screen designated by reference numeral 730.

Moreover, the portable terminal displays the change item 450 on the location of a letter corresponding to the object of album B, which is an object currently located in the activation area as a result of the object shift. That is, in response to the object shift by the sweep event of the user, the portable terminal adaptively changes and provides the change item 450 displayed on the letter B provided as the GUI object 400 of the control area 300.

Next, when a particular object is located and activated in the activation location as shown in the screen 720 or 730, the user can make a command, such as execution or reproduction of the particular object.

For example, as shown in the screen designated by reference numeral 730, the user can move the currently activated album B object from the output area 200 to the control area 300 through an input event. Here, it is assumed that the input event is, for example, a drag-and-drop event performed by the user.

Therefore, in response to the drag-and-drop event, the portable terminal drags and then drops the display of the album B object from the output area 200 to the control area 300. Then, upon recognizing the drop of the album B object in the control area 300, the portable terminal executes the album B object as shown in the screen designated by reference numeral 740. The above description with reference to FIG. 7 corresponds to a case in which the portable terminal executes an application in relation to reproduction of album contents and performs reproduction of music files included in the album B object by the application.

Furthermore, the user can move directly to a desired object by performing a tap event on a particular tap point from among the letters in the control area 300. For example, when the user makes a tap event on the tap point assigned letter F, the portable terminal may instantly provide an object of album F on the activation area of the output area 200 in response to the tap event. At this time, during the shift to the object of album F, the portable terminal can provide an intuitive screen that looks like an actual disc change. For example, through an intuitive interface, the portable terminal can sequentially display objects from the current object to the final object, which is the object of album F, on the activation area.

In the meantime, as shown in the screen designated by reference numeral 750, the user can search for detail information of a particular object provided on the activation area. For example, the user can generate an input event corresponding to a "long press" in the tap point assigned letter F of the control area 300. Then, in response to the input event, the portable terminal can provide an object corresponding to the letter F to the activation area and intuitively provide detail information of the object. For example, if the object corresponding to the letter F is called album F object, the portable terminal adaptively provides information (titles, etc.) of music files included in the album F object through an information providing area 755.

That is, if the album F object includes a music file entitled A, a music file entitled B, a music file entitled C, and a music file entitled D, the portable terminal sequentially displays detail information of the music files from title A to title D through the information providing area 755 up to the time point at which the input event is released. That is, the portable terminal sequentially displays the titles from A to D for possible selection.

Furthermore, at the time of providing the function of searching for a particular object as described above, the portable terminal can provide an effect of rotating the particular object in the activation area. That is, the portable terminal can provide a visual screen providing an intuitive message reporting that a search for the album F object is currently being conducted.

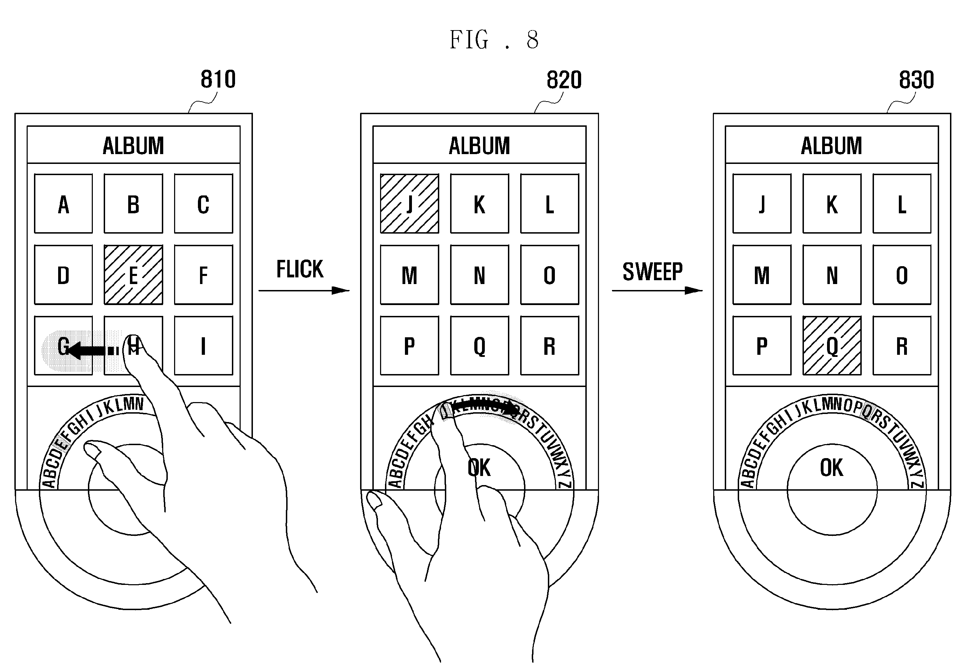

FIG. 8 illustrates exemplary screens for controlling object navigation through interaction between an output area and a control area according to another exemplary embodiment of the present invention.

FIG. 8 illustrates another type of list view mode according to the present invention. For example, the screens shown in FIG. 8 correspond to exemplary screens providing a block list of album contents stored in the portable terminal as in the description with reference to FIGs. 6 and 7. As noted from FIG. 8, the output area 200 of FIG. 8 does not include an activation area.

Therefore, the user can input a tap event on a particular object from among the album contents (for example, contents of album A through album I) provided through the block list in the output area 200. Then, the portable terminal displays the particular object of the tap event occurrence in a manner to enable the particular object to be discriminated (usually visually) from the other objects, for example, by using a highlight, different color, brightness, change size, flash on and off, etc., and displays the change item 450 on the GUI object 400 corresponding to the particular object.

For example, as shown in the screen designated by reference numeral 810, when the user performs a tap event on the album E object, the portable terminal highlights the album E object and displays the change item 450 on the location of letter E, that is, on the GUI object 400 corresponding to the album E object.

Next, the user can make a category shift from the category including the albums of A to I to a previous or next category including different album contents. In other words, if the user causes a flick event in the object output area 200, the portable terminal can shift to a next or previous category from the current category and provide another block list including new album objects.

By way of an example, as shown in the screens 810 and 820, when the user performs a leftward flick event in the output area 200, the portable terminal displays album contents (for example, contents of album J to album R) of the next category in response to the flick event. Furthermore, after the category shift, the portable terminal may provide a highlight on the object assigned to the uppermost tap point and display the change item 450 on the letter (letter J) corresponding to the highlighted object from among the GUI objects 400 in the control area 300.

Moreover, the user may perform a navigation using the GUI object 400 of the control area 300. For example, as shown in the screens 820 and 830, the user can start a sweep event at the location of letter J from among the GUI objects 400 in the control area 300. The start of the sweep event may correspond to the step of touching by the user. Thereafter, the user may progress the sweep event in a semi-circular shape from the location of letter J toward the location of letter Z and can release the sweep event at the location of letter Q. The progress of the sweep event may correspond to the step of movement after the touch by the user.

Then, in response to the sweep event, the portable terminal displays the objects while sequentially highlighting them from the album J object to the album Q object of the output area 200, and then highlights the album Q object as shown in the screen 830 by recognizing the album Q object as the final selected object at which the sweep event is released. Furthermore, the portable terminal displays the change item 450 on the location of letter Q of the GUI object 400 of the control area 300.

Next, as in the description with reference to FIGs. 6 and 7, the user can make a command, such as execution or reproduction of the particular object.

For example, as shown in the screens designated by reference numerals 810 to 830, the user can move a particular object from the output area 200 to the control area 300 through an input event. Here, it is assumed that the input event is, for example, a drag-and-drop event.

Therefore, in response to the drag-and-drop event, the portable terminal drags and then drops the particular object from the output area 200 to the control area 300. Then, upon recognizing the drop of the particular object in the control area 300, the portable terminal executes the particular object. The above description with reference to FIG. 8 corresponds to a case in which the portable terminal executes an application in relation to reproduction of album contents and performs reproduction of music files included in the particular object by the application.

In the meantime, a person of ordinary skill in the art understands and appreciates that the category shift in FIG. 8 may be performed through either a flick event in the output area 200 or a sweep event on the GUI object 400 of the control area 300. For example, in the screen 810, the user can start a sweep event at a start tap point of the control area 300, that is, at the location of letter A of the GUI object 400, and release the sweep event after progressing the sweep event up to the location of letter Q as shown in the screen 830. Then, in response to the sweep event, the portable terminal performs a sequential navigation from the album A object to the album I object as shown in the screen 810, shifts the category, and then performs a sequential navigation up to the album Q object.

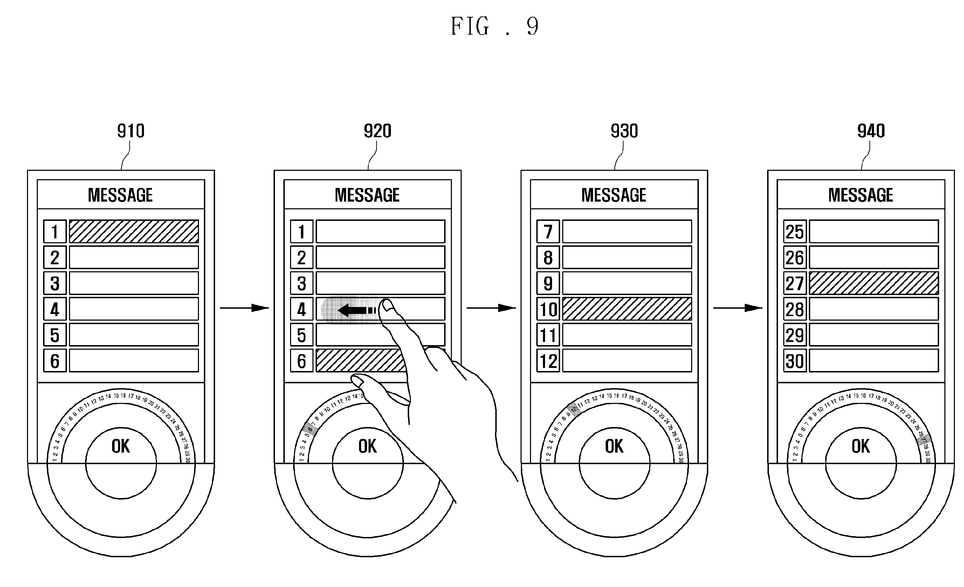

FIG. 9 illustrates exemplary screens for controlling object navigation through interaction between an output area and a control area according to another exemplary embodiment of the present invention.

FIG. 9 illustrates another type of list view mode according to the present invention. For example, the screens shown in FIG. 9 correspond to exemplary screens providing a list of text messages stored in the portable terminal. As noted from FIG. 9, the output area 200 of FIG. 9 does not include an activation area, and the GUI objects 400 are provided through number items.

Therefore, the user can input a tap event on a particular object from among the text message items (for example, messages of item No. 1 to No. 6) provided in a list on the output area 200. Then, the portable terminal displays the particular object of the tap event occurrence in a manner that permits the particular object be discriminated from among the other objects, for example, by using a highlight, etc., and displays the change item 450 on the GUI object 400 corresponding to the particular object.

For example, as shown in the screens designated by reference numerals 910 and 920, when the user makes a tap event on the item No. 6 from among the objects provided in the output area 200, the portable terminal highlights the item No. 6 and displays the change item 450 on the location of number 6, that is, on the GUI object 400 corresponding to the item No. 6.

Next, the user can make a category shift from the category including the messages of item No. 1 to item No. 6 to a previous or next category including different message items. In other words, if the user causes a flick event in the object output area 200, the portable terminal can shift to a next or previous category from the current category and provide another list including new objects according to the direction of progress of the flick event.

By way of an example, as shown in the screens 920 and 930, when the user performs a leftward flick event in the output area 200, the portable terminal displays objects (for example, messages of item No. 7 to item No. 12) of the next category in response to the flick event. Further, after the category shift, the portable terminal can display the change item 450 on another GUI object 400.

Moreover, the user may perform a navigation using the GUI object 400 of the control area 300. For example, as shown in the screens 920 and 930, the user can start a sweep event at the location of number 1 from among the GUI objects 400 in the control area 300. Thereafter, the user may progress the sweep event in a semi-circular shape from the location of number 1 toward the location of number 30 and can release the sweep event at the location of number 10.

Then, in response to the sweep event, the portable terminal displays the objects while sequentially highlighting them from the object No. 1 to the object No. 10 of the output area 200, and then highlights the object No. 10 as shown in the screen 930 by recognizing the object No. 10 as the final selected object at which the sweep event is released. Further, the portable terminal displays the change item 450 on the location of number 10 of the GUI object 400 of the control area 300.

Next, as in the description with reference to FIGs. 6 and 7, the user can make a command, such as execution or reproduction of the particular object.

For example, as shown in the screens designated by reference numerals 910 to 940, the user can move a particular object from the output area 200 to the control area 300 through an input event. Here, it is assumed that the input event comprises, for example, a drag-and-drop event.

Therefore, in response to the drag-and-drop event, the portable terminal drags and then drops the particular object from the output area 200 to the control area 300. Then, upon recognizing the drop of the particular object in the control area 300, the portable terminal executes the particular object. The above description with reference to FIG. 9 corresponds to a case in which the portable terminal executes an application in relation to the execution of received text messages and displays contents of the particular object or provides a text message writing screen by the application.

That is, as shown in the case of FIG. 9, according to the user setting, the present invention renders it is possible to appoint an execution application using the control area 300. For example, by appointing a text message identifying application, it is possible to display the contents of the text message according to the above-described process. Further, by appointing a reply application, it is possible to display a text message writing screen, which allows the writing of a reply text message to a received text message, according to the above-described process.

In the meantime, it goes without saying that the category shift in FIG. 9 may be performed through either a flick event in the output area 200 or a sweep event on the GUI object 400 of the control area 300.

Further, the user can move directly to a desired object by making a tap event on a particular tap point from among the numbers in the control area 300. For example, when the user makes a tap event on the tap point assigned number 27 in the screens 910 to 930, the portable terminal may instantly provide a category including an object of item number 27 in the output area 200 in response to the tap event.

The above illustrative description with reference to FIGs. 1 to 9 discusses a method of controlling object navigation through interaction between an output area and a control area of a touch screen according to an embodiment of the present invention and exemplary screens according to the method. Hereinafter, a discussion of a portable terminal for performing the operation of the present invention as described above with reference to FIGs. 1 to 9. It should be noted that the present invention is not limited to the portable terminal described below and is applicable to various modifications based on the portable terminal.

The following description is based on an assumption that the portable terminal described below comprises a mobile communication terminal, although the present invention is not limited to the mobile communication terminal.

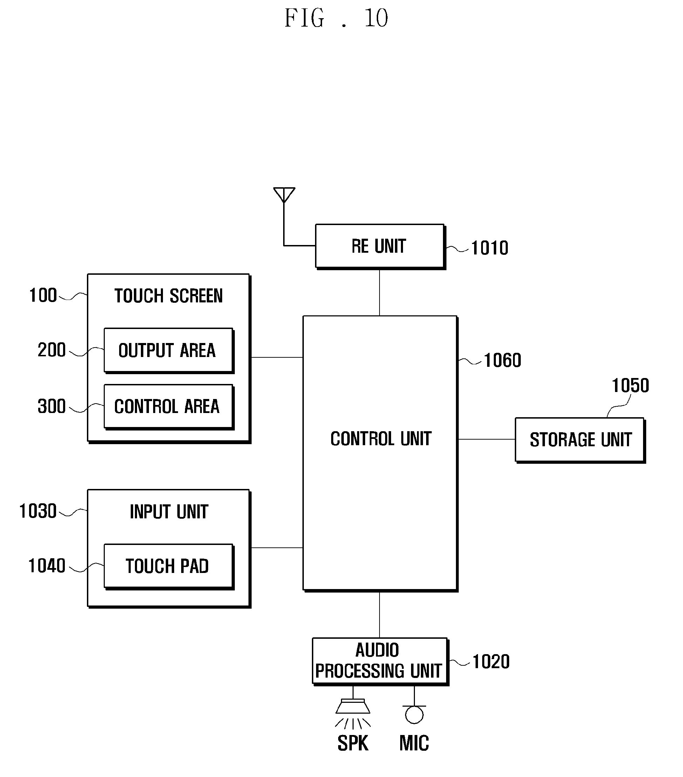

The portable terminal according to the present invention may include all mobile communication terminals operating based on communication protocols corresponding to various communication systems, all information communication devices and multimedia devices including a Portable Multimedia Player (PMP), a digital broadcast player, a Personal Digital Assistant (PDA), a portable game terminal, and a smart phone, and application devices thereof. Hereinafter, a general structure of a portable terminal according to the present invention will be described with reference to FIG. 10.

FIG. 10 is a block diagram schematically illustrating the structure of a portable terminal according to the present invention. The portable terminal shown in FIG. 10 is preferably a mobile communication terminal, as an example. However, the portable terminal of the present invention is in no way limited to the mobile communication terminal.

Referring now to FIG. 10, the portable terminal according to the present invention preferably includes a Radio Frequency (RF) unit 1010, an audio processing unit 1020, an input unit 1030, a touch screen 100, a storage unit 1050, and a control unit 1060. Further, the touch screen 100 includes an output area 200 and a control area 300, and the input unit 1030 includes a touch pad 1040.

The RF unit 1010 performs communication of the portable terminal. The RF unit 1010 establishes a communication channel with a supportable mobile communication network and performs a communication, such as a voice communication, a video telephony communication, and a data communication. The RF unit 1010 includes an RF transmitter unit for up-converting and amplifying the frequency of an outgoing signal and an RF receiver unit for low noise-amplifying an incoming signal and down-converting the frequency of the frequency of the incoming signal. The RF unit 1010 may be omitted according to the type of the portable terminal of the present invention.

The audio processing unit 1020 is preferably connected to a microphone and a speaker, and converts an analog voice signal input from the microphone to data and outputs the converted data to the control unit 1060, and outputs a voice signal input from the control unit 1060 through the speaker. That is, the audio processing unit 1020 converts an analog voice signal input from the microphone to a digital voice signal or converts a digital voice signal input from the control unit 1060 to an analog voice signal. The audio processing unit 1020 can reproduce various audio components (for example, an audio signal generated by reproduction of an MP3 file) according to selection by a user. The voice signal processing function of the audio processing unit 1020 can be omitted according to the type of the portable terminal of the present invention.

The input unit 1030 receives various text messages and transfers signals input in relation to the setting of various functions and function control of the portable terminal to the control unit 1060. The input unit 1030 generates an input signal according to an action of the user and may include an input means, such as a keypad or touch pad. According to the present exemplary embodiment, the input unit 1030 includes the touch pad 1040 and can receive an input event of the user.

The touch pad 1040 comprises a physical medium for processing an input of a user through an interaction between the user and the portable terminal. Especially, the touch pad 1040 includes a touch area for input of a user input event as described above with reference to FIGs. 1 to 9. Upon detecting an input event in the touch area, the touch pad 1040 transfers the input event to the control unit 1060. Then, the control unit 1060 processes object navigation in response to the input event. According to the present invention, the input unit 1030 may include only 1240k.

The touch screen 100 corresponds to an input/output means simultaneously performing both an input function and a display function. The touch screen 100 displays screen data occurring during the operation of the portable terminal and displays status information according to the user's key operation and function setting. That is, the touch screen 100 can display various screen data in relation to the status and operation of the portable terminal. The touch screen 100 visually displays color information and various signals output from the control unit 1060. Moreover, the touch screen 100 receives an input event of the user. Especially, the touch screen 100 receives a tap event, a flick event, a sweep event, and a drag-and-drop event for a function control according to an execution application. The touch screen 100 generates a signal according to the input event as described above and transfers the generated signal to the control unit 1060.

Especially, according to this exemplary embodiment of the present invention, the touch screen 100 includes the output area 200 and the control area 300. The output area 200 displays such an object as described above with reference to FIGs. 1 to 9. Further, the output area 200 receives an input event for the object navigation as described above.

The output area 200 corresponds to an area assigned in order to control navigation of an object provided on the output area 200. The output area 200 displays a GUI object for controlling the operation of the object provided on the output area 200. The GUI object may be provided as a virtual item in various forms changing according to the execution application. For example, the GUI object can be provided as a virtual item in the form of a letter or a number. Further, the output area 200 displays a change item that changes in response to the object navigation of the output area 200. In addition, the control area 300 receives the input event of the user by the GUI object.

According to the exemplary embodiment of the present invention, the touch pad 1040 of the input unit 1030 and the touch screen 100 are disposed adjacent to each other, so that the touch area of the touch pad 1040 and the control area 300 of the touch screen 100 are organically combined with each other.

The storage unit 1050 may include a Read Only Memory (ROM) and a Random Access Memory (RAM). The storage unit 1050 can store various data generated and used by the portable terminal. The data includes data occurring according to the execution of an application in the portable terminal and all types of data that can be generated by the portable terminal or can be stored after being received from the exterior (for example, base station, counterpart portable terminal, and personal computer). Especially, the data may preferably include a user interface provided in the portable terminal, various setup information according to the use of the portable terminal, a GUI object set for each execution application, and a change item. Further, the storage unit 1050 may include at least one buffer for temporarily storing data occurring during execution of the application.

The control unit 1060 preferably performs general functions of the portable terminal and controls signal flow between the blocks within the portable terminal. The control unit 1060 controls signal flow between the elements, such as the RF unit 1010, the audio processing unit 1020, the input unit 1030, the touch screen 100, and the storage unit 1050.

Especially, the control unit 1060 controls object navigation through the interaction between the output area 200 and the control area 300 of the touch screen 100. That is, when an input event of the user is detected in one of the output area 200 and the control area 300, the control unit 1060 processes navigation of the object provided through the output area in response to the input event. Further, in response to the input event, the control unit 1060 processes location shift of the change item on the GUI objects provided in the control area 300.

The control unit 1060 performing the control operation can control general operations of the present invention as described above with reference to FIGs. 1 to 10. The function control of the control unit 1060 can be implemented by software to perform the operation of the present invention.

Further, the control unit 1060 may include a base band module for a mobile communication service of the portable terminal. Moreover, the base band module may be installed either at each of the control unit 1060 and the RF unit 1010 or separately from the control unit 1060 and the RF unit 1010.

For convenience of description, FIG. 10 illustrates only a schematic construction of the portable terminal. However, the portable terminal of the present invention is not limited to the illustrated construction.

Therefore, the portable terminal of the present invention may further include elements not mentioned above, which include a camera module for acquiring image data through photographing of an object, a digital broadcast receiving module capable of receiving a digital broadcast, a Near Field Communication (NFC) module for near field communication, and an Internet communication module performing an Internet function through communication with the Internet network. Although it is impossible to enumerate all such elements not mentioned above since they have various modifications due to the trend of convergence between the digital devices, the portable terminal of the present invention may further include equivalents of the elements described above. Further, it goes without saying that some of the elements described above may be omitted or replaced by other elements in the portable terminal of the present invention, as obvious to one skilled in the art.

As described above, the present invention can be applied to the portable terminal but is not limited to the portable terminal. That is, the present invention can be applied to all types of electronic apparatuses including an input unit allowing user's input. The input unit may include all types of input means, such as a motion sensor for generating a gesture input signal by recognizing the motion of a user, a touch pad or touch screen for generating a gesture input signal according to contact and movement of a particular object (finger, stylus pen, etc.), and a voice input sensor for generating a gesture input signal by recognizing the voice of the user.

Moreover, the electronic apparatus corresponds to an apparatus equipped with such an input unit and includes portable terminals (PDA, mobile communication terminal, portable game germinal , PMP, etc.) and display devices (TV, LFD(Large Format Display), DS(Digital Signage), media pole, etc.). The display unit of the electronic apparatus may include various display devices, such as a Liquid Crystal Display (LCD), a Plasma Display Panel (PDP), and an Organic Light Emitting Diode (OLED).

Further, when the present invention is implemented in the display device, the input unit may be either implemented as a touch pad or touch screen integrally embedded in the display device or implemented as a separate device. Here, the separate device refers to a device equipped with a gyro sensor, an acceleration sensor, an IRLED, an image sensor, a touch pad, or a touch screen, and can recognize a motion or pointing operation. For example, the separate device can be implemented as a remote controller. The remote controller may include a keypad for recognition of button input of the user, or may include a gyro sensor, an acceleration sensor, an IRLED, an image sensor, a touch pad, or a touch screen, so that it can recognize motion or pointing operation and provide a control signal thereof to the electronic apparatus through wire or wireless communication, thereby enabling the electronic apparatus to recognize the gesture according to the control signal.

The electronic apparatus according to the embodiment of the present invention as described above may include the same elements of the portable terminal of the present invention as described above and can operate in the same way as the portable terminal. For example, the display device of the present invention includes a display unit displaying an output area and a control area, a user input unit for the input of an event for control of the input area or the control area, and a control unit for displaying an object in the output area in response to the event and displaying a GUI for controlling the object in the control area. Further, the output area of the display device is located above the control area.

Further, a control method of such a display device includes: determining if there is an input of an event for controlling a GUI displayed in the control area; and changing the object displayed in the output area in response to the event. Further, the control method includes: determining if there is an input of an event for controlling an object displayed in an output area; and changing a graphic user interface displayed in the control area in response to the event.

According to the method and apparatus of object navigation in a portable terminal proposed by the present invention, the touch screen is divided into an output area and a control area for interaction between them, so that it is possible to improve the convenience of the user according to the navigation and induce and improve the user's interest through various types of navigation controls.

Further, according to the present invention, object navigation is controlled through interaction between the output area and the control area in the touch screen of the portable terminal, so that it is possible to secure the user's visual field during the navigation and improve the user's convenience.

In addition, when an input for object navigation occurs in one of the output area and the control area, change information according to the navigation is provided in both areas, thereby enabling the user to intuitively recognize the change information of the object according to the navigation. Moreover, the present invention provides a proper GUI object corresponding to an execution application in the control area, thereby enabling rapid navigation between objects by using the GUI object. As a result, the user can perform a rapid search for a desired object.

Furthermore, in the present invention, the interaction between the output area and the control area divided from the display area can provide an intuitive user interface.

The above-described methods according to the present invention can be realized in hardware or as software or computer code that can be stored in a recording medium such as a CD ROM, a RAM, a floppy disk, a hard disk, or a magneto-optical disk or downloaded over a network, so that the methods described herein can be executed by such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein.

Although exemplary embodiments of the present invention have been described in detail hereinabove, it should be clearly understood that many variations and modifications of the basic inventive concepts herein described, which may be apparent to those skilled in the art, will still fall within the spirit and scope of the exemplary embodiments of the present invention as defined in the appended claims.

## Claims

1. An object navigation control system comprising:
a first area (200) for displaying an object (150); and
a second area (300) for displaying a Graphic User Interface (GUI) (310, 400) for controlling navigation of the object.

2. The object navigation control system of claim 1, **characterized in that** when the event for navigation occurs in one of the first area (200) and the second area (300), change information (450) according to the navigation is provided in both the first area (200) and the second area (300).

3. The object navigation control system of claim 2, **characterized in that** the first area (200) provides the change information (450) through the object being shifted, and the second area (300) provides the change information (450) through location change of a change item displayed on the GUI (310, 400).

4. The object navigation control system of claim 3, **characterized in that** the second area (300) displays each index symbol corresponding to an object shifted (151, 153) according to the event through the GUI (310, 400), and displays location change of each index symbol of the GUI (310, 400) through the change item.

5. The object navigation control system of claim 1, **characterized in that** change information comprises an item marking an indication of the location of an object activated in the second area 200, when a particular object (153) displayed in the first area (200) is located in the second area (300), the particular object (153) is executed.

6. An electronic apparatus comprising:
a display unit (100) for displaying an output area (200) and a control area (300); and
an input unit (1030) for input of an event for control of the output area (200) or the control area (300); and
a control unit (1060) for displaying an object in the output area (200) in response to the event and displaying a graphic user interface (310, 400) for controlling the object (150) in the control area (300).

7. The electronic apparatus of claim 6, **characterized in that** when the event for navigation occurs in one of the output area (200) and the control area (300), the control unit provides change information (450) according to the navigation in both the output area (200) and the control area (300).

8. The electronic apparatus of claim 7, **characterized in that** the control unit provides the change information (450) through direct shift between objects (151, 152, 153) displayed on the output area, and provides the change information through location change of a change item displayed on the GUI (310, 400).

9. The electronic apparatus of claim 8, **characterized in that** the control area (300) displays each index symbol corresponding to an object shifted according to the event through the GUI (310, 400), and displays location change of each index symbol of the GUI (310, 400) through the change item.

10. The electronic apparatus of claim 8, **characterized in that** the output area (200) is located above the control area (300) and, when a particular object displayed in the output area is located in the control area, the particular object is executed under the control of the control unit (1060).

11. A method of controlling object navigation, the method comprising:
detecting an event in one of an output area (200) and a control area (300); and
in response to the event, controlling navigation of an object (150)provided in the output area (200) and movement of a change item (450) provided on the control area (300).

12. The method of claim 11, wherein the output area (200) comprises an area for displaying an object, and the control area (300) comprises an area for displaying a Graphic User Interface GUI) (310, 400) for controlling navigation of the displayed object.

13. The method of claim 12, **characterized in that** controlling navigation of an object provided in the output area (200) and movement of a change item provided on the control area (300) comprises controlling, in response to the event occurring in the output area, navigation of the object displayed in the output area and location change of the change item displayed on the GUI.

14. The method of claim 13, **characterized in that** controlling navigation of an object provided in the output area (300) and movement of a change item provided on the control area (200) comprises controlling, in response to the event occurring in the control area (200), navigation of the object displayed in the output area (300) and location change of the change item displayed on the GUI (213, 223).

15. The method of claim 14, **characterized in that** controlling navigation of an object provided in the output area and movement of a change item provided on the control area comprises:
displaying each index symbol corresponding to an object shifted according to the event through the GUI (203);
displaying location change of each index symbol of the GUI through the change item (213, 223); and
when a particular object displayed in the output area is located in the control area, executing the particular object (231, 243).
